# EUROPÄISCHE PATENTANMELDUNG

(11) **EP 4 485 214 A1**
(43) Veröffentlichungstag der Anmeldung: **01.01.2025**
(21) Anmeldenummer: 23181360.1
(22) Anmeldetag: 26.06.2023
(51) Int. Cl.: G06F 11/34, G05B 19/05

(54) **INDUSTRIESTEUERUNG, SYSTEM UND VERFAHREN ZUR ANALYSE**

(71) Anmelder: Siemens Aktiengesellschaft, 80333 München (DE)
(72) Erfinder: Hartwig, Anton, 92342 Freystadt (DE); Hartwig, Peter, 92342 Freystadt (DE); Spindler, Jörg, 91227 Leinburg (DE)
(74) Vertreter: Siemens Patent Attorneys

(57) **Zusammenfassung**

Die Erfindung betrifft eine Industriesteuerung (100) mit einer Recheneinheit (1), einem Betriebssystem (2) und einem Anwenderprogramm (AW), welches zum Steuern eines industriellen Prozesses in der Recheneinheit (1) zum Ablauf gebracht wird, wobei das Anwenderprogramm (AW) zumindest einen Hauptbaustein (OB1) und zumindest einen Funktionsbaustein (FB1) und zumindest eine Funktion (FC1) aufweist, welche innerhalb des Hauptbausteins (OB1) aufrufbar sind, das Betriebssystem (2) ist ausgestaltet den Hauptbaustein (OB1) zyklisch abzuarbeiten und den Programmcode in dem Hauptbaustein (OB1) auszuführen, weiterhin ausgestaltet den zumindest einen Funktionsbaustein (FB1) und/oder die Funktion (FC1) aufzurufen und nach dem Aufruf auch deren Programmcode auszuführen, wobei das Betriebssystem (2) weiterhin mit einem Aufzeichnungsmittel (3) ausgestaltet ist, welches bei Ausführung des Hauptbausteins (OB1) während der Programmausführung die vom Betriebssystem (2) koordinierten Aufrufe des/der Funktionsbaustein(e) (FB1) und/oder der Funktion(en) (FC1) als Ereignisbeschreibungs-Daten (4) in einem Analysespeicher (5) aufzeichnet, dabei ist das Betriebssystem (2) ausgestaltet bei Aufruf des Hauptbausteins (OB1), des Funktionsbausteins (FB1) oder der Funktion (FC1) dem Aufzeichnungsmittel (3) diese Aufrufereignisse (E1,E2,E3) für die Ereignisbeschreibungs-Daten (4) mitzuteilen, wobei weiterhin ein Ausgabemittel (6) vorhanden ist, welches die Ereignisbeschreibungs-Daten (4) an einer Schnittstelle (7) für ein Analyse-Werkzeug (200) bereitstellt.

## Beschreibung

Die Erfindung betrifft eine Industriesteuerung mit einer Recheneinheit, einem Betriebssystem und einem Anwenderprogramm, welches zum Steuern eines industriellen Prozesses in der Recheneinheit zum Ablauf gebracht wird, wobei das Anwenderprogramm zumindest einen Hauptbaustein und zumindest einen Funktionsbaustein und zumindest eine Funktion aufweist, welche innerhalb des Hauptbausteins aufrufbar sind, das Betriebssystem ist ausgestaltet den Hauptbaustein zyklisch abzuarbeiten und den Programmcode in dem Hauptbaustein auszuführen, weiterhin ausgestaltet den zumindest einen Funktionsbaustein und/oder die Funktion aufzurufen und nach dem Aufruf auch deren Programmcode auszuführen.

Auch betrifft die Erfindung ein Verfahren zur Analyse eines zeitlichen Ablaufverhaltens eines Anwenderprogramms, dazu wird in einer Industriesteuerung mit einer Recheneinheit und einem Betriebssystem das Anwenderprogramms zum Steuern eines industriellen Prozesses in der Recheneinheit zum Ablauf gebracht, wobei in dem Anwenderprogramm zumindest ein Hauptbaustein aufgerufen wird und in dem Hauptbaustein zumindest ein Funktionsbaustein und/oder zumindest eine Funktion aufgerufen wird, das Betriebssystem arbeitet den Hauptbaustein und den Programmcode in dem Hauptbaustein zyklisch ab, ebenfalls wird der Programmcode in dem Funktionsbaustein und/oder der Funktion nach dem Aufruf auch der Programmcode ausgeführt.

Des Weiteren betrifft die Erfindung ein System zur Analyse eines zeitlichen Ablaufverhaltens eines Anwenderprogramms in einer Industriesteuerung umfassend die Industriesteuerung, ein Analyse-Werkzeug mit einer Computereinheit und mit einem Bildschirm und einer Kommunikationsverbindung.

Im Sinne der Erfindung wird unter Industriesteuerung vorzugsweise eine speicherprogrammierbare Steuerung (SPS) verstanden, dieses ist ein Automatisierungsgerät, das zur Steuerung oder Regelung einer Maschine oder einer Anlage in einem industriellen Umfeld eingesetzt wird. Bei einer zyklusorientierten SPS wird durch ein vom Hersteller fest eingespeichertes Betriebssystem dieser Zyklus kontrolliert. Das Steuerungsprogramm kann bedingt durch seine Programmbausteine Verzweigungen und bedingte Aufrufe beinhalten, welche unterschiedliche Laufzeiten zur Folge hat.

Für einen Anwender von Industriesteuerungen gibt es derzeit die Möglichkeit mit SIMATIC S7-1500 Profiling das Laufzeitverhalten einer Applikation auf einer SIMATIC S7-1500 Steuerung zu analysieren und zu bewerten siehe "SIMATIC S7-1500 Profiling Beitrags-ID: 109750245, V1.0.2, 11/2017". Dies hat allerdings den Nachteil, dass in das Anwenderprogramm zwei zusätzliche Bausteine eingebracht werden müssen. Der Anwender muss also sein Anwenderprogramm mit diesem Aufruf von FBs instrumentalisieren, was zum einen ein hoher Anpassungsaufwand für den Kunden ist, mit zeitlichen Veränderungen im Anwenderprogramm einhergeht und erst nach dem man Probleme festgestellt hatte, erfolgen kann.

Aus der DE 10 2005 020 507 A1 ist die Einrichtung und Konditionierung von Automatisierungsgeräten bekannt, bei der in einer Analyseeinrichtung die erwarteten Abarbeitungszeiten von Programmen, Unterprogrammen und Prozeduren bei vorgebbaren Bedingungen rechnerisch ermittelt werden.

In der EP 2 477 085 B1 wird ein Erfassungsmittel vorgestellt. Es ist in der SPS angeordnet und misst die Zeiten der Bausteine. Dies entspricht dem Bausteinaufruf in dem SIMATIC S7-1500 Profiling-Tool.

Es ist daher Aufgabe der vorliegenden Erfindung, dem Anwender eine verbesserte Möglichkeit zur Analyse für eine anschließende Optimierung des zeitlichen Ablaufverhaltens des Steuerungsprogramms zu geben.

Die Aufgabe wird dadurch gelöst, dass das Betriebssystem weiterhin mit einem Aufzeichnungsmittel ausgestaltet ist, welches bei Ausführung des Hauptbausteins während der Programmausführung die vom Betriebssystem koordinierten Aufrufe des/der Funktionsbaustein(e) und/oder der Funktion(en) als Ereignisbeschreibungs-Daten in einem Analysespeicher aufzeichnet, dabei ist das Betriebssystem ausgestaltet bei Aufruf des Hauptbausteins, des Funktionsbausteins oder der Funktion dem Aufzeichnungsmittel diese Aufrufereignisse für die Ereignisbeschreibungs-Daten mitzuteilen, weiterhin ist ein Ausgabemittel vorhanden, welches die Ereignisbeschreibungs-Daten an einer Schnittstelle für ein Analyse-Werkzeug bereitstellt.

Die notwendigen Daten für ein Profiling des Anwenderprogrammes werden nun immer aufgezeichnet. Der Anwender muss nichts dafür tun und kann jederzeit auf die Daten zugreifen.

Bei einer Analyse ist es ein Ziel, verschiedene Programmabschnitte zu bestimmen, die optimiert werden können oder müssen, um die Anwendungsgeschwindigkeit und Reaktionsfähigkeit zu erhöhen und den Speicher- und Ressourcenverbrauch zu senken. Mit dieser betriebssysteminternen Lösung wird die Laufzeit des Anwenderprogramms nicht belastet. Aus einem Rohdatenformat für die Ereignisbeschreibungs-Daten können die Daten so aufbereitet werden das sie mit Standardtools visuell sichtbar gemacht werden. Als Beispiel könnte hier ein Chrome Browser mit der Funktionalität Tracing (URL: chrome: // tracing/) eingesetzt werden.

Erfindungsgemäß steht nun eine SPS zur Verfügung an die man einen Profiler zur Analyse anschließen kann. Profiler sind Werkzeuge, um die Laufzeit und andere Metriken von Software zu analysieren. Mit Profiling-Tools lassen sich schnell und einfach Flaschenhälse erkennen und Probleme beheben.

Bezüglich eines Rohdatenformates hat es sich als nützlich herausgestellt, dass das Aufzeichnungsmittel ausgestaltet ist pro Aufrufereignis einen Datensatz mit zumindest folgender Datenstruktur in dem Analysespeicher abzulegen:
eine Ereignis-ID,
eine Ereigniskategorie,
einen Ereignistyp,
einen Zeitstempel,
eine Prozess-ID,
eine Thread-ID.

Ein relativ einfaches Format, das von den Browsern mit der Tracing-Viewer Funktionalität akzeptiert wird, ist das JSON-Arrayformat. Im Wesentlichen handelt es sich um ein Array von Ereignisobjekten. Die Ereignisse müssen nicht in der Reihenfolge der Zeitstempel sortiert sein. Die Ereignis-ID entspräche dann dem aufgerufenen Baustein und es könnte sogar eine Zusatzinformation bei Bedarf bereitgestellt werden, nämlich ein Ereignisname wie zum Beispiel "FB1".

Eine weitere vorteilhafte Ausgestaltung sieht vor, dass die Schnittstelle als eine Anwendungsprogrammierschnittstelle für einen Webserver oder einen Webbrowser ausgestaltet ist.

Anwender können nun über die Anwendungsprogrammierschnittstelle über einen Anforderungskanal und einen Bereitstellungs-Kanal mit dem Analysespeicher kommunizieren.

Um Datenverluste durch Überschreiben von Daten bei der Aufzeichnung zu vermeiden ist der Analysespeicher in eine Mehrzahl von Pufferspeichern aufgeteilt und das Betriebssystem weist ein Speicherverwaltungsmittel auf, welches ausgestaltet ist die Schreibzugriffe des Aufzeichnungsmittel auf den Analysespeicher zu koordinieren und auf unterschiedliche Pufferspeicher umzuleiten, für den Fall, dass zu Gunsten einer Datenkonsistenz ein Pufferspeicher für weitere Schreibzugriffe gesperrt wird. Die permanenten Datenzugriffe auf die Speicher dürfen bereits bestehende Daten nicht beeinflussen, sollte ein Puffer gerade abgefragt werden so wird derjenige eingefroren.

Die Erfinder haben erkannt, dass ein Bedarf an SPS-Geräten vorhanden ist, welche "ready to run" sind oder "out of the box" sofort funktionieren, insbesondere im Hinblick auf ein Datenprofiling, ohne an der SPS selbst Änderungen am System vornehmen zu müssen. Schnell kann sich ein Anwender folgende Fragen beantworten:
- Wie ist die aktuelle Auslastung der SPS?
- Welche Blöcke haben die meiste Laufzeit?
- Welcher Block erzeugt einen Flaschenhals?
- Wo sind die Hot Spots in der Anwendung (aufgrund ineffizienter Programmierung)?

Die Lösung ist, dass diese Informationen als Rohdaten direkt aus der SPS mit dem modernen WebAPI abgefragt werden können und auf einem Client-System aufgerufen und grafisch dargestellt werden. Dem Anwender wird dadurch eine Transparenz über die Ausführungsebenen und Programmteile, Laufzeit-Optimierung und Fehlerdiagnose, Bewertung der Leistungsreserve des Systems und Qualitätssicherung der Anwendung in der SPS gegeben.

Auf einem graphischen Tool wird dann für eine spätere Optimierung der Laufzeitschwankung eine Profilansicht, in der beispielsweise nur die OBs (Haupt-OB) und Interrupt-Ereignisse zu sehen sind, evtl. können auch Kommunikationsinformationen (z.B. Kommunikationsaufgabe nach Priorität) an starken Belastungen und Unterbrechungen Schuld sin.

Auch wird die eingangs genannte Aufgabe durch ein Verfahren zur Analyse eines zeitlichen Ablaufverhaltens eines Anwenderprogramms gelöst, dazu wird in einer Industriesteuerung mit einer Recheneinheit und einem Betriebssystem das Anwenderprogramm zum Steuern eines industriellen Prozesses in der Recheneinheit zum Ablauf gebracht, wobei in dem Anwenderprogramm zumindest ein Hauptbaustein aufgerufen wird und in dem Hauptbaustein zumindest ein Funktionsbaustein und/oder zumindest eine Funktion aufgerufen wird, das Betriebssystem arbeitet den Hauptbaustein und den Programmcode in dem Hauptbaustein zyklisch ab, ebenfalls wird der Programmcode auch in dem Funktionsbaustein und/oder in der Funktion nach dem Aufruf ausgeführt, wobei im Betriebssystem ein Aufzeichnungsmittel betrieben wird, welches bei Ausführung des Hauptbausteins während der Programmausführung die vom Betriebssystem koordinierten Aufrufe des/der Funktionsbaustein(e) und/oder der Funktion(en) als Ereignisbeschreibungs-Daten in einem Analysespeicher aufzeichnet, dazu werden die Aufrufereignisse vom Betriebssystem bei Aufruf des Hauptbausteins, des Funktionsbausteins oder der Funktion dem Aufzeichnungsmittel zum Eintrag in die Ereignisbeschreibungs-Daten mitgeteilt, weiterhin werden über ein Ausgabemittel die Ereignisbeschreibungs-Daten an einer Schnittstelle für ein Analyse-Werkzeug bereitgestellt.

Mit dem aufgezeigten Verfahren ermöglicht man einem Anwender eine Rohdaten-Abholung aus der SPS für eine genaue Analyse des Laufzeitverhaltens eines SPS-Projektes. Es unterstützt beim Erkennen von zeitintensiven Programmteilen, ineffizienter Programmierung und ermöglicht das frühzeitige Erkennen von Laufzeitproblemen.

Für die notwendigen Rohdaten, nämlich die Profiling-Daten, muss weder das Anwenderprogramm geändert werden, noch ändert sich das zeitliche Verhalten des Anwenderprogrammes. Kunden, die ein Problem in ihrem Anwenderprogramm detektieren, können umgehend über die Profiling Daten ihr Problem analysieren. Die Profilingdaten können in beliebige Datenformate für andere Profiling Tools gewandelt werden.

Das Aufzeichnungsmittel legt pro Aufrufereignis einen Datensatz mit zumindest folgender Datenstruktur in dem Analysespeicher ab: eine Ereignis-ID, eine Ereigniskategorie, einen Ereignistyp (ET), einen Zeitstempel, eine Prozess-ID, eine Thread-ID.

Darüber hinaus können die Gesamt- und Eigenzeiten jedes Aufrufs im SPS-Projekt zyklusgenau erfasst und dargestellt werden.

Aus der Ereignis-ID kann eine Block-ID und daraus der Name z.B. "FB1" abgeleitet werden. Diese Zusatzinformation wird bei Bedarf über einen API-Aufruf geholt.

Damit kann man eine typbasierte Ansicht erhalten, die einen einfachen Vergleich verschiedener Instanzen und Aufrufe untereinander ermöglicht. Eine Ablaufstruktur des Anwenderprogrammes für einen oder mehrere Zyklen kann dargestellt werden. Ein Detektieren der Hotspots in einem Zyklus und ein Anzeigen eines Jitter-Verhaltens für einzelne Obs ist jetzt möglich.

Dazu wird die Schnittstelle als eine Anwendungsprogrammierschnittstelle für einen Webserver oder einen Webbrowser betrieben und die Ereignisbeschreibungs-Daten sind mittels einer grafischen Anzeige auf einem Bildschirm für einen Anwender auswertbar.

Der Webserver oder der Webbrowser kann über die Anwendungs-programmierschnittstelle über einen Anforderungskanal gewünschte Daten selektieren und über einen Bereitstellungs-Kanal die gewünschten Daten erhalten.

Für eine Datenkonsistenz wird der Analysespeicher in eine Mehrzahl von Pufferspeichern aufgeteilt und das Betriebssystem koordiniert mittels eines Speicherverwaltungsmittels die Schreibzugriffe des Aufzeichnungsmittels auf unterschiedliche Pufferspeicher des Analysespeichers, für den Fall, dass zu Gunsten der Datenkonsistenz, einem bestimmtem Pufferspeicher dieser für weitere Schreibzugriffe gesperrt wird.

Mit der Aufteilung in mehrere einzelnen Puffer kann man eine Datenkonsistenz erreichen, denn Zugriffe auf die Puffer dürfen bereits bestehende Daten nicht beeinflussen, sollte ein Puffer grade abgefragt werden so wird derjenige Puffer eingefroren.

Ebenfalls wird die eingangs genannte Aufgabe durch ein System zur Analyse eines zeitlichen Ablaufverhaltens eines Anwenderprogramms in einer Industriesteuerung gelöst. Dazu umfasst das System die Industriesteuerung, ein Analyse-Werkzeug mit einer Computereinheit und mit einem Bildschirm eine Kommunikationsverbindung, die Industriesteuerung umfasst eine Recheneinheit, ein Betriebssystem und ein Anwenderprogramm, welches zum Steuern eines industriellen Prozesses in der Recheneinheit zum Ablauf gebracht wird, wobei das Anwenderprogramm zumindest einen Hauptbaustein und zumindest einen Funktionsbaustein und zumindest eine Funktion aufweist, welche innerhalb des Hauptbausteins aufrufbar sind, das Betriebssystem ist ausgestaltet den Hauptbaustein zyklisch abzuarbeiten und den Programmcode in dem Hauptbaustein auszuführen, weiterhin ausgestaltet den zumindest einen Funktionsbaustein und/oder die Funktion aufzurufen und nach dem Aufruf auch deren Programmcode auszuführen, das Betriebssystem ist weiterhin mit einem Aufzeichnungsmittel ausgestaltet, welches bei Ausführung des Hauptbausteins während der Programmausführung die vom Betriebssystem koordinierten Aufrufe des/der Funktionsbaustein(e) und/oder der Funktion(en) als Ereignisbeschreibungs-Daten in einem Analysespeicher aufzeichnet, dabei ist das Betriebssystem ausgestaltet bei Aufruf des Hauptbausteins, des Funktionsbausteins oder der Funktion dem Aufzeichnungsmittel diese Aufrufereignisse für die Ereignisbeschreibungs-Daten mitzuteilen, dass weiterhin ein Ausgabemittel vorhanden ist, welches die Ereignisbeschreibungs-Daten an einer Schnittstelle für das Analyse-Werkzeug bereitstellt, dabei ist das Analyse-Werkzeug mit einem softwarebasierten grafischen Anzeigemittel ausgestaltet um die Ereignisbeschreibungs-Daten auf dem Bildschirm für einen Anwender auswertbar darzustellen.

Ein Ausführungsbeispiel der Industriesteuerung, und des Systems in dem auch das Verfahren mehr erläutert wird, ist in der Zeichnung dargestellt. Es zeigen:
- FIG 1: eine erfindungsgemäße Industriesteuerung,
- FIG 2: einen Datensatz mit Ereignisdaten,
- FIG 3: die aus FIG 1 bekannte Industriesteuerung mit AB-Abfragen,
- FIG 4: eine Datenabfragemaske eines Analyse-Werkzeugs,
- FIG 5a: eine mögliche Bildschirmdarstellung mittels eines Software basierten Anzeigenmittels und
- FIG 5b: eine mögliche Bildschirmdarstellung mittels eines des Software basierten Anzeigenmittels in tabellarischer Darstellung.

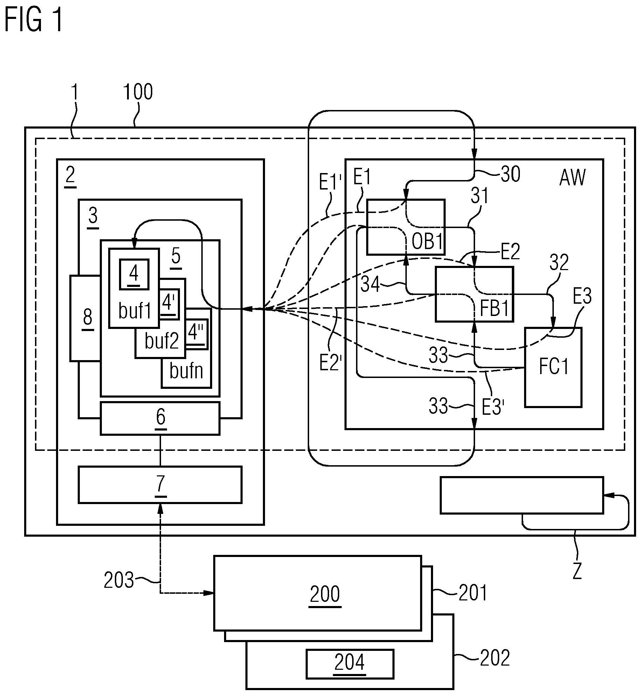

Gemäß FIG 1 ist eine Industriesteuerung 100, insbesondere eine SPS, mit einer Recheneinheit 1, ein Betriebssystem 2 und ein Anwenderprogramm AW dargestellt. Die Industriesteuerung 100 ist ausgestaltet, das Anwenderprogramm AW mittels einer zyklischen Programmausführung Z immer wieder zum Ablauf zu bringen. In dem vorliegenden Beispiel ruft ein Hauptbaustein UB1 einen Funktionsbaustein FB1 auf und der Funktionsbaustein FB1 ruft wiederum eine Funktion FC1 auf. Das Betriebssystem 2 ist dazu ausgestaltet, den Hauptbaustein OB1 zyklisch abzuarbeiten und den Programmcode in dem Hauptbaustein OB1 auszuführen. Ebenso ist das Betriebssystem dazu ausgestaltet, nach Aufruf des Funktionsbausteins FB1 und/oder der Funktion FC1 auch deren Programmcode auszuführen.

Erfindungsgemäß weist nun das Betriebssystem 2 ein Aufzeichnungsmittel 3 auf, welches ausgestaltet ist bei Ausführung des Hauptbausteins OB1 während der Programmausführung die vom Betriebssystem 2 koordinierten Aufrufe des Funktionsbausteins FB1 und der Funktion FC1 als Ereignisbeschreibungsdaten 4 in einen Analysespeicher 5 aufzuzeichnen. Dabei ist das Betriebssystem 2 ausgestaltet bei Aufruf des Hauptbausteins OB1, des Funktionsbausteins FB1 oder der Funktion FC1 dem Aufzeichnungsmittel 3 die entsprechenden Aufrufereignisse E1,E2,E3 bzw. entsprechende Endereignisse E1`,E2`,E3` mitzuteilen. Des Weiteren ist in der Industriesteuerung 100 ein Ausgabemittel 6 vorhanden, welches ausgestaltet ist die Ereignisbeschreibungsdaten 4 an einer Schnittstelle 7 für ein Analyse-Werkzeug 200 bereitzustellen.

Ausgehend von dem Anwenderprogramm AW erzeugt dieses ein OB1-Aufruf 30 wodurch der Hauptbaustein OB1 ausgeführt wird. In dem Hauptbaustein OB1 erzeugt der Hauptbaustein OB1 einen FB1-Aufruf 31 durch welchen der Funktionsbaustein FB1 aufgerufen wird. Innerhalb des Funktionsbausteins FB1 wird wiederum ein FC1-Aufruf 32 ausgeführt, welcher die Funktion FC1 aufruft. Jedes der genannten Aufrufe erzeugt ein Aufrufereignis E1,E2,E3. Wird der Hauptbaustein OB1 aufgerufen, so zeichnet das Betriebssystem 2 ein erstes Aufrufereignis E1 auf. Wird der Funktionsbaustein FB1 aufgerufen, so zeichnet das Betriebssystem 2 ein zweites Aufrufereignis E2 auf. Wird die Funktion FC1 aufgerufen, so zeichnet das Betriebssystem 2 ein drittes Aufrufereignis E3 auf. Analog zu den Aufrufereignissen werden durch das Betriebssystem 2 auch die Endereignisse E1',E2',E3' aufgezeichnet. Hat die Funktion FC1 ihre Arbeit erledigt, so teilt sie das mit dem Endereignis E3` mit. Hat der Funktionsbaustein FB1 seine Arbeit erledigt, so teilt er dies mit dem Endereignis E2` mit und wurde der Hauptbaustein OB1 vollständig durchlaufen, so wird das mit dem Endereignis E1' mitgeteilt. Entsprechend geben die Bausteine die Rückmeldung-OB1 35, die Rückmeldung-FB1 34 und die Rückmeldung-FC1 33 zurück.

Der Analysespeicher 5 weist eine Mehrzahl von Pufferspeichern buf1,...,bufn auf und das Betriebssystem 2 weist ein Speicherverwaltungsmittel 8 auf, welches ausgestaltet ist die Schreibzugriffe des Aufzeichnungsmittel 3 auf den Analysespeicher 5 zu koordinieren und auf unterschiedliche Pufferspeicher buf1,...,bufn umzuleiten, für den Fall, dass zugunsten einer Datenkonsistenz ein Pufferspeicher buf1 für weitere Schreibzugriffe gesperrt wird.

Dem Analyse-Werkzeug 200 kann somit über die Schnittstelle 7 die Ereignisbeschreibungs-Daten 4 (bzw. 4' oder 4") mitgeteilt werden. Das Analyse-Werkzeug 200 weist eine Computereinheit 201 mit einen Bildschirm 202 auf, und ist mit einer Kommunikationsverbindung 203 mit der Schnittstelle 7 verbunden. Auf dem Bildschirm 202 kann über ein softwarebasiertes grafisches Anzeigemittel 204 eine Darstellung der Ereignisdaten erfolgen.

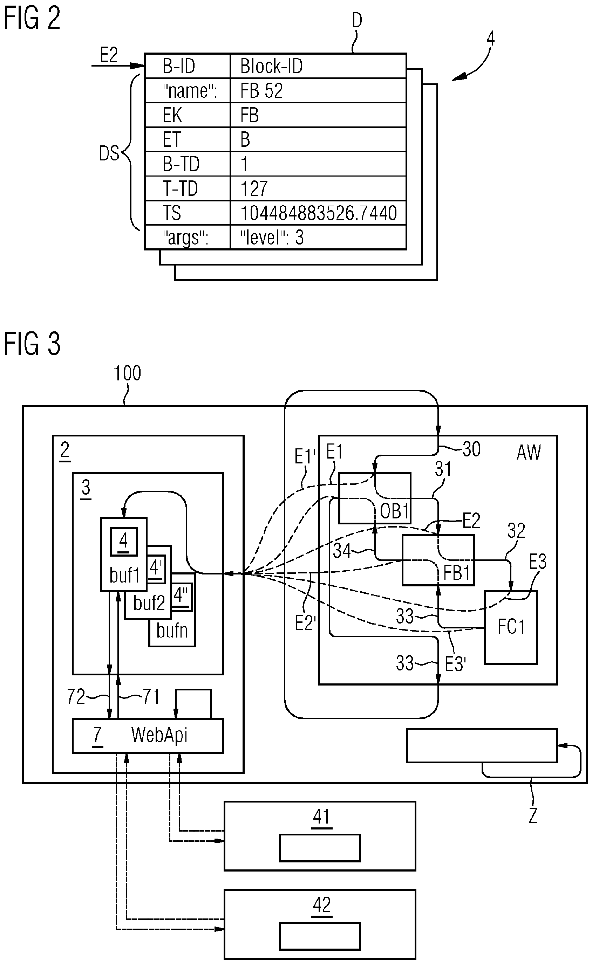

Die FIG 2 zeigt die Ereignisbeschreibungs-Daten 4 am Beispiel des zweiten Aufrufereignisses E2. In dem Datensatz D ist folgende Datenstruktur DS in dem Analysespeicher 5 abgelegt. Eine Ereignis-ID E-ID, eine Ereigniskategorie EK, ein Ereignistyp ET, ein Zeitstempel TS, eine Prozess-ID P-ID, eine Thread-ID T-ID und ein Eintrag für eine Verschachtelungstiefe args = level:3.

Eine Zeile könnte so aussehen:

```
 {"name":"FB 52", "cat":"FB", "ph": "B", "pid": 1, "tid": 127,
 "ts":
 104484883526.7440, "args": {"level": 3}},
```

Die Ereigniskategorie EK kann ein OB-Aufruf, ein FB-Aufruf, ein FC-Aufruf, eine Prozess-Abbild (PAE und PAA) Aktualisierung oder ein direktes Schreiben zu einer Peripherie sein.

Wird im Anwenderprogramm über die Operanden "E" oder "A" auf die Ein- und Ausgänge zugegriffen, dann erfolgt kein direkter Zugriff auf die Ein- und /Ausgabebaugruppen. In diesem Fall wird auf einen Speicherbereich im Systemspeicher der CPU zugegriffen. Dieser Bereich wird als Prozessabbild der Eingänge (PAE) und Prozessabbild der Ausgänge (PAA) bezeichnet. Die Inhalte des Prozessabbildes (PAE und PAA) spiegeln nicht die aktuellen Werte der Ein- und Ausgänge wider, sondern die Werte zum Zeitpunkt der Aktualisierung des Prozessabbildes.

Falls für einzelne Prozesse aktuellere Werte benötigt werden, besteht auch die Möglichkeit der direkten Peripherieadressierung.

Ebenso können den Ein- und Ausgängen von Peripheriebaugruppen auch E/A-Adressen außerhalb des Prozessabbildes zugeordnet werden. Auf diese E/A-Adressen muss über die "Peripherieadressierung" zugegriffen werden. Dieser Beitrag beschreibt zum besseren Verständnis zunächst die verschiedenen Prozess-abbild-Arten und danach die "Peripherieadressierung".

### OB1-Prozessabbild

Das OB1-Prozessabbild (OB1-PA) ist in jeder CPU verwendbar. Es wird zyklisch, vor der Abarbeitung des OB1 aktualisiert. Die zyklische Programmabarbeitung erfolgt dabei in der nachfolgenden Reihenfolge:
Abarbeitung von internen Aufgaben des Betriebssystems der CPU. Schreiben der Zustände aus dem OB1-Prozessabbild der Ausgänge auf die Ausgänge der Baugruppen. Einlesen der Eingangszustände aus den Baugruppen in das OB1-Prozessabbild der Eingänge.

Die Aktualisierung des OB1-Prozessabbildes kann dann im Anwenderprogramm mit der SFC 26 (UPDAT_PI) und der SFC 27 (UPDAT_PO) ausgeführt werden.

Allgemein gilt beim zyklischen Aktualisieren des OB1-Prozessabbildes:
Je kürzer die Zykluszeit ist, umso häufiger wird eine Aktualisierung des OB1-Prozessabbildes durchgeführt.

Der Zeitbedarf für die Aktualisierung des Prozessabbildes hängt von der jeweiligen Anlage ab. Einflussfaktoren sind hier:
Die Anzahl der einzelnen Baugruppen, aus denen gelesen bzw. in die geschrieben werden muss.

Die Baudrate, über die mit den einzelnen Baugruppen kommuniziert wird. Die verwendeten Protokolle, über die die einzelnen Baugruppen angesprochen werden (MPI, PROFIBUS, ...). Wurde das OB1-Prozessabbild vergrößert (nicht bei allen CPUs möglich), dann kann sich auch die Zykluszeit verlängern, wenn dadurch mehr Baugruppen im Prozessabbild liegen.

### Teilprozessabbilder (TPA)

Neben dem OB1-Prozessabbild gibt es bei einigen CPU-Typen die Möglichkeit Teilprozessabbilder (TPA) zu nutzen. Diesen Teilprozessabbildern können Sie E-/A-Adressbereiche der Baugruppen zuordnen. Jeder Adressbereich kann nur entweder dem OB1-Prozessabbild oder einem Teilprozessabbild zugeordnet werden. Eine Mehrfachzuordnung ist nicht möglich.

Die Teilprozessabbilder können auf zwei unterschiedliche Arten aktualisiert werden;

im Anwenderprogramm über die SFC 26 (UPDAT_PI) und die SFC 27 (UPDAT_PO), durch Zuordnung eines TPA zu einem OB.

Die gelesenen/geschriebenen Daten der Teilprozessabbilder sind bei einer Aktualisierung mit einer SFC bis zu einer CPUabhängigen Datenlänge konsistent. Informationen dazu finden Sie in der S7-Onlinehilfe zum SFC.

Die Ausgangswerte des zugeordneten Teilprozessabbildes werden sofort nach der Abarbeitung des OBs in die Ausgänge geschrieben.

### Die "Peripherieadressierung"

Das Prozessabbild umfasst oft nicht den gesamten Peripherieadressbereich der CPU.

Liegen E/A-Adressbereiche einer Baugruppe außerhalb des Prozessabbildes, muss auf diese Bereiche mittels "Peripherieadressierung" zugegriffen werden. Der Zugriff auf die Peripherieadressen erfolgt dabei unverzüglich nach dem Ansprechen der Adresse im Anwenderprogramm. Mit der "Peripherieadressierung" ist damit immer gewährleistet, dass der aktuelle Wert sofort eingelesen wird bzw. sofort eine Ausgabe umgesetzt wird. Dies ist besonders bei Analogwerten und Prozessalarmen wichtig.

"Peripherieadressierung" bedeutet also, dass auf die Baugruppen direkt zugegriffen wird. Ein Befehl im Anwenderprogramm sieht hierzu vor den Bereich der anzusprechenden Adresse ein "P": vor.

Zusammenfassend kann gesagt werden, dass auch die Kommunikationsereignisse aufgezeichnet werden, welche dann wiederum später in einer Ansicht dargestellt werden können.

Der Ereignistyp ET kann beispielsweise ein B für Beginn enthalten oder auch E für ein Ende.

Die benötigten Daten könnten auch als eine Binärdatei mit einem Array von Laufzeitdateneinträgen (jeweils mit einer Länge von 16 Byte) wie folgt dargestellt werden. Die Bytereihenfolge der Profilerstellungsdaten erfolgt in Little Endian. Das Format der Dateneinträge (immer 16 Byte) hängt vom ersten Byte, dem Eintragstyp, ab. Die Ereignisse können auch eine PIP (Prozess-Image-Peripherie) für lesen und schreiben sein.

| **Value** | **Entry Type** (Block event) |
|---|---|
| 0x00 | Invalid |
| 0x01 | Block event: start of a code block |
| 0x02 | Block event: end of a code block |
| 0x03 | Block event: interrupt begins |
| 0x04 | Block event: interrupt ends |
| 0x10 | PIP read |
| 0x11 | PIP write |
| 0x20 | Direct read access |
| 0x21 | Direct write access |
| 0x30 | Error ID |

| | |
|---|---|
| 0x31 | Communication load and cycle time |
| n | For future use |

Das o.g. Block event würde dann wiederum so aufgeteilt werden

| | 0 | 1 | 2 | 3 |
|---|---|---|---|---|
| 0 | Entry type | Block type | Block number | |
| 4 | OB number | | Level | Priority |
| 8 | Time stamp | | | |
| 12 | | | | |

Der Zeitstempel wird in pico Sekunden angegeben.

Der Block Type sähe dann folgendermaßen aus:

| **Value** | **Block Types** |
|---|---|
| 0x00 | Invalid |
| 0x01 | OB |
| 0x02 | FC |
| 0x03 | FB |
| 0x11 | SFC |
| 0x12 | SFB |

Ein Beispiel:

| | 0 | 1 | 2 | 3 |
|---|---|---|---|---|
| 0 | 0x01 | 0x02 | 0x12 | 0x00 |
| 4 | 0x01 | 0x00 | 0x01 | 0x01 |
| 8 | 0x08 | 0x07 | 0x06 | 0x05 |
| 12 | 0x04 | 0x03 | 0x02 | 0x01 |

| | |
|---|---|
| 0x01: | start of a code block |
| 0x02: | block type (FC) |
| 0x0012: | block number (18) |
| 0x0001: | OB number (1) |
| 0x01: | Call hierarchy (1) |
| 0x01: | Priority (1) |
| 0x0102030405060708: | Time stamp [ps] |

### PIP Read/Write

| | 0 | 1 | 2 | 3 |
|---|---|---|---|---|
| 0 | Entry type | n.a. | PIP ID | |
| 4 | n.a. | n.a. | n.a. | Priority |
| 8 | Time stamp | | | |
| 12 | | | | |

### Beispiel:

| | 0 | 1 | 2 | 3 |
|---|---|---|---|---|
| 0 | 0x10 | n.a. | 0x01 | 0x00 |
| 4 | n.a. | n.a. | n.a. | 0x01 |
| 8 | 0x08 | 0x07 | 0x06 | 0x05 |
| 12 | 0x04 | 0x03 | 0x02 | 0x01 |

| | |
|---|---|
| 0x10: | PIP Read |
| 0x0001: | PIP ID (1) |
| 0x01: | Priority (1) |
| 0x0102030405060708: | Time stamp [ps] |

Auch eine Kommunikationslast kann aufgezeichnet werden:

| | 0 | 1 | 2 | 3 |
|---|---|---|---|---|
| 0 | Entry type | n.a. | Communication load | |
| 4 | Last cycle time | | | |
| 8 | Time stamp | | | |
| 12 | | | | |

| | | | | |
|---|---|---|---|---|
| **Kommunikationslast in** [%] | | | | |

### Zykluszeit:

### Beispiel:

| | 0 | 1 | 2 | 3 |
|---|---|---|---|---|
| 0 | 0x31 | n.a. | 0x12 | 0x00 |
| 4 | 0x03 | 0x02 | 0x01 | 0x00 |
| 8 | 0x08 | 0x07 | 0x06 | 0x05 |
| 12 | 0x04 | 0x03 | 0x02 | 0x01 |

| | |
|---|---|
| 0x31: | Communication load event |
| 0x0012: | Communication load (18%) |
| 0x00010203: | Last cycle time (66051us) |
| 0x0102030405060708: | Time stamp [ps] |

Gemäß FIG 3 ist im Wesentlichen die Industriesteuerung 100 aus FIG 1 dargestellt. Es wird hier gemäß FIG 3 veranschaulicht, wie über die Anwendungs-Programmierschnittstelle WEBAP, über einen Anforderungskanal 71 und einen Bereitstellungs-Kanal 72 Daten abgefragt werden können. Ein erster API-aufruf 41 setzt eine Anfrage "Get profiling data" an die Schnittstelle 7, welche als web-api ausgestaltet ist, ab. Über den Anforderungskanal 71 werden in dem Analysespeicher 5 in den entsprechenden Pufferspeicher buf1,...,bufn die Ereignisbeschreibungs-Daten 4 als Rohdaten abgeholt. Zusätzlich kann man über die Anwendungsprogrammierschnittstelle web-api mit einem speziellen api-Befehl, nämlich dem zweiten API-Aufruf 42 "Get block name" eine zusätzliche Bezeichnung einer Block-ID, beispielsweise FB52 erhalten.

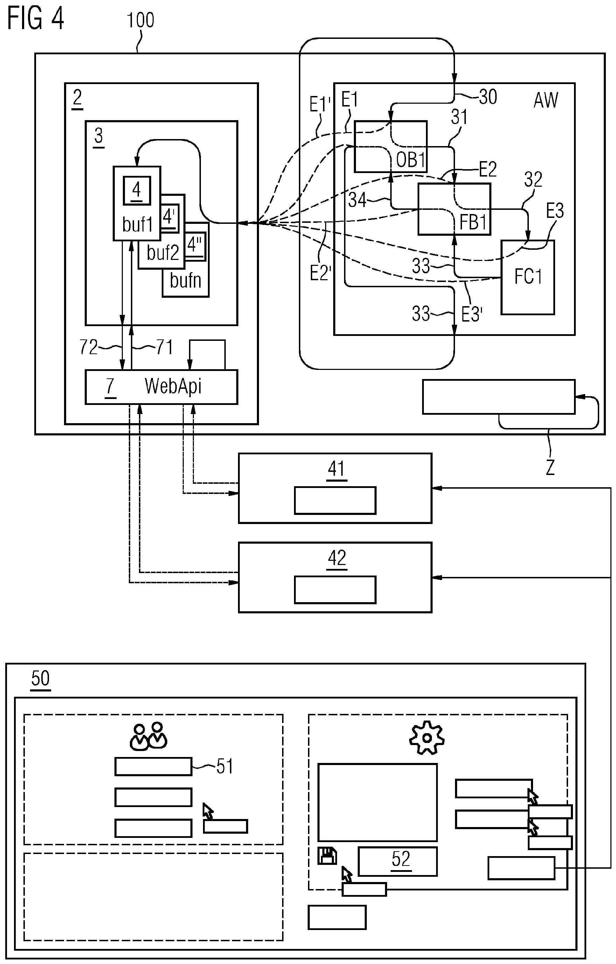

Gemäß FIG 4 ist eine Datenabfrage 50, wie sie in dem Analyse-Werkzeug 200 vorkommt, dargestellt. Über eine Zieladress-Einstellung 51, kann die entsprechende Industriesteuerung 100 angewählt werden. Über eine Datenformat-Einstellung 52, kann beispielsweise ein JSON-Datenformat zu Abfrage voreingestellt werden. Über eine Datenabfrage-Button 53 werden die Daten mittels der API-Funktionalität abgefragt.

```
 {"name":"FB 52", "cat":"FB", "ph": "B", "pid": 1, "tid": 127,
 "ts": 104484883526.7440, "args": {"level": 3}},
```

Bezogen auf die Schreibzugriffe auf die Peripherie, wie z.B. die Peripherieadressierung PIP = Process Immage Peripherie oder Direkt kann ein JSON-Datenformat File auch so aussehen:

```
        {"name":"PIP
        WRITE","cat":"PIP","id":"2","ph":"O","pid":1.0,"tid":
        1,"ts":129789199.4574,"args": {"snapshot": {"params": {"
        read":0, "OB61cycle":147}}}},
        {"name":"PIP
        READ","cat":"PIP","id":"1","ph":"O","pid":1.0,"tid":1
        ,"ts":129789225.9189,"args": {"snapshot": {"params": {"r
        ead":0,"OB61cycle":147}}}},
        {"name":"DIRECT
        WRITE","cat":"DIRECT","id":"5","ph":"O","pid":16,"tid
        ":1,"ts":129790110.6174,"args": {"snapshot": {"params":
        {"write adress":"Q1032.0","db":0,"type":"byte 8
        bit","value":"0xff","OB33cycle":184}}}},
        {"name":"ASLOG","cat":"DIAG","id":"3","ph":"O","pid":
        16, "tid":1, "ts":129790114.3070,"args":{"snapshot":{"params":{"error":
        "0x2943","OB33cycle":184}}}},
```

JSON steht für "JavaScript Object Notation"

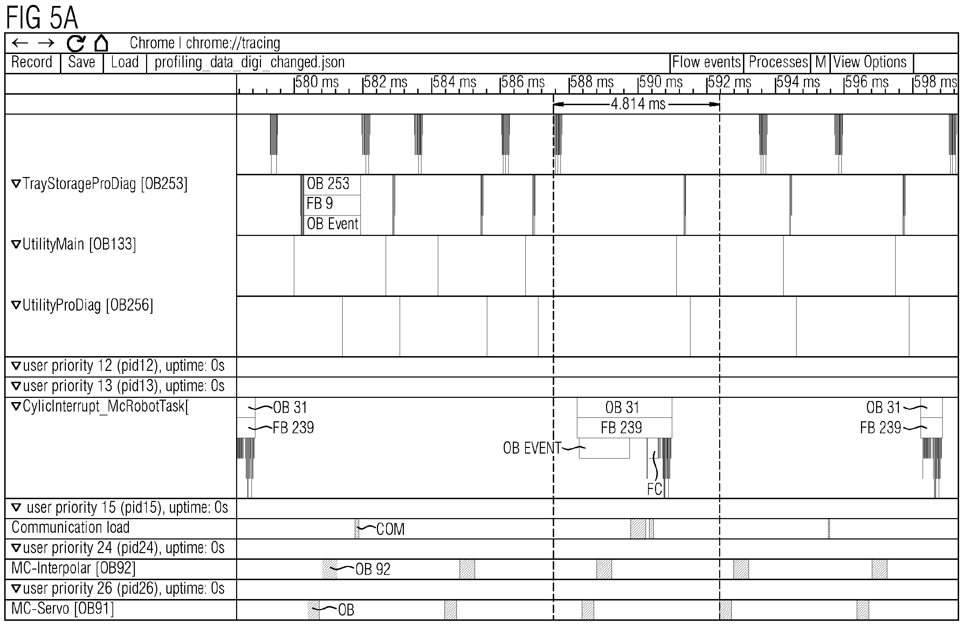

FIG 5a zeigt eine mögliche Bildschirmdarstellung mittels eines Software basierten Anzeigenmittels am Beispiel von chrome://tracing/.

Man kann mit der Ansicht das Verhalten eines Bausteins untersuchen. Die Länge des Balkens entspricht der Laufzeit für den Bausteinaufruf. Es können Aufrufreihenfolgen in Bausteinen sichtbar gemacht werden und einzelne ungewöhnlich lange Funktionen sind schnell erkennbar. Es kann eine Suche nach den e nach den Längsten und zweit längsten Bausteinen erfolgen und die können dann näher untersucht werden. Es kann nach einem OB mit kurzem Aufrufintervall und langer Laufzeit gesucht werden. Eine farbliche Kennzeichnung kann helfen die Bausteine zu unterscheiden. Suche nach dem FB oder FC der sehr häufig aufgerufen wird, und damit die längste Gesamtlaufzeit hat, dies verspricht den größten Erfolg nach einer anschließenden Optimierung.

Man kann sich einen generellen Überblick über die Verteilung der Gesamten Laufzeit auf die jeweiligen Bausteine verschaffen und erhält einen Einblick in die Aufrufstruktur.

Bibliotheks-, Betriebssystem-Bausteine können ausgeblendet werden. Es wird weiterhin die Möglichkeit eröffnet die Profiling Daten an einen Customer Support weiterzuleiten, um die Performance von Bibliotheksbausteinen oder der Hardware über mehrere Versionen zu überwachen.

Das Sichtbarmachen aller Ereignisse mit einer Zerlegung der Einzelereignisse am Bildschirm hilft einen Inbetriebsetzer bei der Fehlersuche. Die direkten Schreibzugriffe auf die Peripherie könnten zusätzlich als kleine Kreise in Fig 5a dargestellt werden. Wenn jetzt z.B. neben dem OB1, Zyklus-OB ein Sonder-OB durch ein Interrupt aufgerufen wird und es wird in diesem Sonder-OB etwas berechnet, aber es folgt kein Schreibzugriff auf die Peripherie, so wäre in der Ansicht gemäß FIG 5a zwar der Aufruf des Sonder-Obs zu sehen, aber es würde der kleine Kreis fehlen. Die ist dann ein Indikator das hier ein Fehler ist, denn es wird etwas berechnet, aber es erfolgt keine Reaktion.

Beispielsweise fällt jetzt auf, dass in dem Bereich, welche mit der Zeitspanne 4.884 ms gekennzeichnet ist eine Kommunikations-Last "Comminication load" größer ist als in den anderen Bereichen. Hier kann dann reingezoomt werden und das Verhalten kann näher untersucht werden.

In FIG 5a sind die Aufrufe von OB253, OB31, OB92, FB9 und FB239 zu sehen.

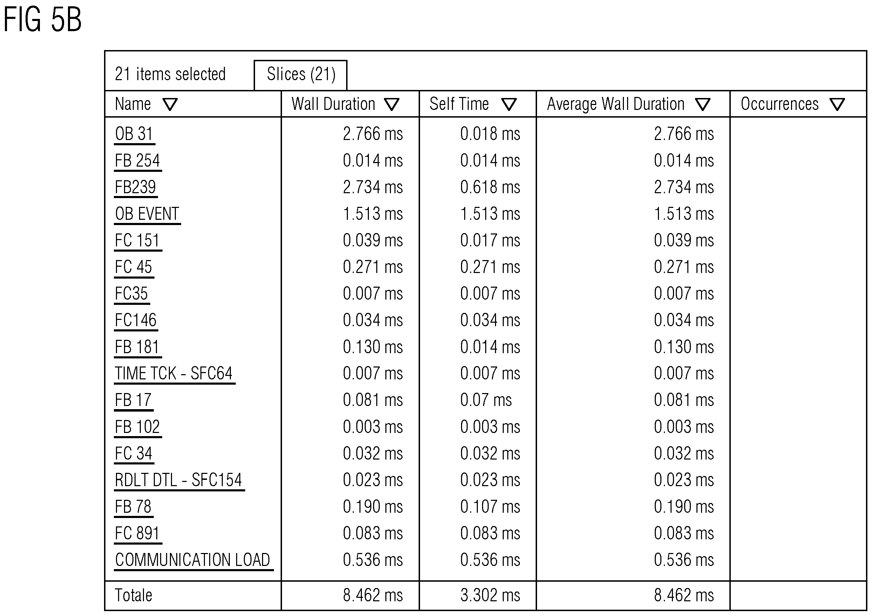

Die Darstellung in FIG 5b zeigt, dass der OB31 und der FB239 die größte Zeit benötigen, welches auch einen Hinweis auf ein Optimierungspotential gibt. Erweiternd zu der Darstellung gemäß FIG 5a werden in der Ansicht von FIG 5b noch weitere Baustein und Funktionsaufrufe sichtbar.

## Patentansprüche

1. Industriesteuerung (100) mit einer Recheneinheit (1), einem Betriebssystem (2) und einem Anwenderprogramm (AW), welches zum Steuern eines industriellen Prozesses in der Recheneinheit (1) zum Ablauf gebracht wird, wobei das Anwenderprogramm (AW) zumindest einen Hauptbaustein (OB1) und zumindest einen Funktionsbaustein (FB1) und zumindest eine Funktion (FC1) aufweist, welche innerhalb des Hauptbausteins (OB1) aufrufbar sind, das Betriebssystem (2) ist ausgestaltet den Hauptbaustein (OB1) zyklisch abzuarbeiten und den Programmcode in dem Hauptbaustein (OB1) auszuführen, weiterhin ausgestaltet den zumindest einen Funktionsbaustein (FB1) und/oder die Funktion (FC1) aufzurufen und nach dem Aufruf auch deren Programmcode auszuführen, **dadurch gekenn- zeichnet**, dass das Betriebssystem (2) weiterhin mit einem Aufzeichnungsmittel (3) ausgestaltet ist, welches bei Ausführung des Hauptbausteins (OB1) während der Programmausführung die vom Betriebssystem (2) koordinierten Aufrufe des/der Funktionsbaustein(e) (FB1) und/oder der Funktion(en) (FC1) als Ereignisbeschreibungs-Daten (4) in einem Analysespeicher (5) aufzeichnet, dabei ist das Betriebssystem (2) ausgestaltet bei Aufruf des Hauptbausteins (OB1), des Funktionsbausteins (FB1) oder der Funktion (FC1) dem Aufzeichnungsmittel (3) diese Aufrufereignisse (E1,E2,E3) für die Ereignisbeschreibungs-Daten (4) mitzuteilen,
dass weiterhin ein Ausgabemittel (6) vorhanden ist, welches die Ereignisbeschreibungs-Daten (4) an einer Schnittstelle (7) für ein Analyse-Werkzeug (200) bereitstellt.

2. Industriesteuerung (100) nach Anspruch 1, wobei das Aufzeichnungsmittel (3) ausgestaltet ist pro Aufrufereignis (E1,E2,E3) einen Datensatz (D) mit zumindest folgender Datenstruktur (DS) in dem Analysespeicher (5) abzulegen:
| | |
|---|---|
| eine | Ereignis-ID (B-ID), |
| eine | Ereigniskategorie (EK), |
| ein | Ereignistyp (ET), |
| einen | Zeitstempel (TS), |
| eine | Prozess-ID (P-ID), |
| eine | Thread-ID (T-ID). |

3. Industriesteuerung (100), nach Anspruch 1 oder 2, wobei die Schnittstelle (7) als eine Anwendungsprogrammierschnittstelle (web-api) für einen Webserver oder einen Webbrowser ausgestaltet ist.

4. Industriesteuerung (100), nach Anspruch 1 oder 2, wobei die Anwendungsprogrammierschnittstelle (web-api) über einen Anforderungskanal (71) und einen Bereitstellungs-Kanal (72) mit dem Analysespeicher (5) verbunden ist.

5. Industriesteuerung (100), nach einem der Ansprüche 1 bis 4, wobei der Analysespeicher (5) eine Mehrzahl von Pufferspeichern (buf1,...,bufn) aufweist und das Betriebssystem (2) ein Speicherverwaltungsmittel (8) aufweist, welches ausgestaltet ist die Schreibzugriffe des Aufzeichnungsmittel (3) auf den Analysespeicher (5) zu koordinieren und auf unterschiedliche Pufferspeicher (buf1,..,bufn) umzuleiten, für den Fall, dass zu Gunsten einer Datenkonsistenz ein Pufferspeicher (buf1) für weitere Schreibzugriffe gesperrt wird.

6. Verfahren zur Analyse eines zeitlichen Ablaufverhaltens eines Anwenderprogramms (AW), dazu wird in einer Industriesteuerung (100) mit einer Recheneinheit (1) und einem Betriebssystem (2) das Anwenderprogramm (AW) zum Steuern eines industriellen Prozesses in der Recheneinheit (RE) zum Ablauf gebracht, wobei in dem Anwenderprogramm (AW) zumindest ein Hauptbaustein (OB1) aufgerufen wird und in dem Hauptbaustein (OB1) zumindest ein Funktionsbaustein (FB1) und/oder zumindest eine Funktion (FC1) aufgerufen wird, das Betriebssystem (2) arbeitet den Hauptbaustein (OB1) und den Programmcode in dem Hauptbaustein (OB1) zyklisch ab, ebenfalls wird auch der Programmcode in dem Funktionsbaustein (FB1) und/oder der Funktion (FC1) nach dem Aufruf ausgeführt, **dadurch gekennzeichnet, dass** im Betriebssystem (2) ein Aufzeichnungsmittel (3) betrieben wird, welches bei Ausführung des Hauptbausteins (OB1) während der Programmausführung die vom Betriebssystem (2) koordinierten Aufrufe des/der Funktionsbaustein(e) (FB) und/oder der Funktion(en) (FC1) als Ereignisbeschreibungs-Daten (4) in einem Analysespeicher (5) aufzeichnet, dazu werden die Aufrufereignisse (E1,E2,E3) vom Betriebssystem (3) bei Aufruf des Hauptbausteins (OB1), des Funktionsbausteins (FB1) oder der Funktion (FC1) dem Aufzeichnungsmittel (3) zum Eintrag in die Ereignisbeschreibungs-Daten (4) mitgeteilt, weiterhin werden über ein Ausgabemittel (6) die Ereignisbeschreibungs-Daten (4) an einer Schnittstelle (7) für ein Analyse-Werkzeug (200) bereitstellt.

7. Verfahren nach Anspruch 6, wobei das Aufzeichnungsmittel (3) pro Aufrufereignis (E1,E2,E3) einen Datensatz (D) mit zumindest folgender Datenstruktur (DS) in dem Analysespeicher (5) ablegt:
| | |
|---|---|
| eine | Ereignis-ID (B-ID), |
| eine | Ereigniskategorie (EK), |
| ein | Ereignistyp (ET), |
| einen | Zeitstempel (TS), |
| eine | Prozess-ID, (P-ID) |
| eine | Thread-ID (T-ID). |

8. Verfahren nach Anspruch 6 oder 7, wobei die Schnittstelle (7) als eine Anwendungsprogrammierschnittstelle (web-api) für einen Webserver oder einen Webbrowser betrieben wird und die Ereignisbeschreibungs-Daten (4) mittels einer grafischen Anzeige auf einem Bildschirm für einen Anwender auswertbar sind.

9. Verfahren nach Anspruch 8, wobei der Webserver oder der Webbrowser über die Anwendungsprogrammierschnittstelle (web-api) über einen Anforderungskanal (71) gewünschte Daten selektieren kann und über einen Bereitstellungs-Kanal (72) die gewünschten Daten erhält.

10. Verfahren nach einem der Ansprüche 6 bis 9, wobei der Analysespeicher (5) in eine Mehrzahl von Pufferspeichern (buf1,...,bufn) aufgeteilt wird und das Betriebssystem (2) mittels eines Speicherverwaltungsmittel (8) die Schreibzugriffe des Aufzeichnungsmittel (3) auf den Analysespeicher (5) koordiniert und auf unterschiedliche Pufferspeicher (buf1,...,bufn) umleitet, für den Fall, dass zu Gunsten einer Datenkonsistenz ein Pufferspeicher (buf1) für weitere Schreibzugriffe gesperrt wird.

11. System (101) zur Analyse eines zeitlichen Ablaufverhaltens eines Anwenderprogramms (AW) in einer Industriesteuerung (100) umfassend,
- die Industriesteuerung (2),
- ein Analyse-Werkzeug (200) mit einer Computereinheit (201) und mit einem Bildschirm (202) und
- eine Kommunikationsverbindung (203)
die Industriesteuerung (100) umfasst eine Recheneinheit (1), ein Betriebssystem (2) und ein Anwenderprogramm (AW), welches zum Steuern eines industriellen Prozesses in der Recheneinheit (1) zum Ablauf gebracht wird, wobei das Anwenderprogramm (AW) zumindest einen Hauptbaustein (OB1) und zumindest einen Funktionsbaustein (FB1) und zumindest eine Funktion (FC1) aufweist, welche innerhalb des Hauptbausteins (OB1) aufrufbar sind, das Betriebssystem (2) ist ausgestaltet den Hauptbaustein (OB1) zyklisch abzuarbeiten und den Programmcode in dem Hauptbaustein (OB1) auszuführen, weiterhin ausgestaltet den zumindest einen Funktionsbaustein (FB1) und/oder die Funktion (FC1) aufzurufen und nach dem Aufruf auch deren Programmcode auszuführen, **dadurch gekennzeichnet, dass** das Betriebssystem (2) weiterhin mit einem Aufzeichnungsmittel (3) ausgestaltet ist, welches bei Ausführung des Hauptbausteins (OB1) während der Programmausführung die vom Betriebssystem (2) koordinierten Aufrufe des/der Funktionsbaustein(e) (FB1) und/oder der Funktion(en) (FC1) als Ereignisbeschreibungs-Daten (4) in einem Analysespeicher (5) aufzeichnet, dabei ist das Betriebssystem (2) ausgestaltet bei Aufruf des Hauptbausteins (OB1), des Funktionsbausteins (FB1) oder der Funktion (FC1) dem Aufzeichnungsmittel (3) diese Aufrufereignisse (E1,E2,E3) für die Ereignisbeschreibungs-Daten (4) mitzuteilen,
dass weiterhin ein Ausgabemittel (6) vorhanden ist, welches die Ereignisbeschreibungs-Daten (4) an einer Schnittstelle (7) für das Analyse-Werkzeug (200) bereitstellt, dabei ist das Analyse-Werkzeug (200) mit einem softwarebasierten grafischen Anzeigemittel (204) ausgestaltet um die Ereignisbeschreibungs-Daten (4) auf dem Bildschirm für einen Anwender auswertbar darzustellen.
